(19) Europäisches Patentamt
European Patent Office
Office européen des brevets

(11) **EP 3 201 520 B1**

(12) **FASCICULE DE BREVET EUROPEEN**

(45) Date de publication et mention
de la délivrance du brevet:
**15.07.2020  Bulletin 2020/29**

(51) Int Cl.:
***F21S 41/143*** *(2018.01)*      ***F21S 41/26*** *(2018.01)*

(21) Numéro de dépôt: **15775191.8**

(22) Date de dépôt: **02.10.2015**

(86) Numéro de dépôt international:
**PCT/EP2015/072882**

(87) Numéro de publication internationale:
**WO 2016/050983 (07.04.2016 Gazette 2016/14)**

(54) **MODULE D'ECLAIRAGE POUR UN DISPOSITIF D'ECLAIRAGE EN SEGMENTS LUMINEUX D'UN PROJECTEUR POUR VEHICULE AUTOMOBILE**

BELEUCHTUNGSMODUL FÜR EINE VORRICHTUNG ZUR BELEUCHTUNG IN LICHTSEGMENTEN EINES KRAFTFAHRZEUGSCHEINWERFERS

LIGHTING MODULE FOR A DEVICE FOR LIGHTING IN LIGHT SEGMENTS OF A MOTOR VEHICLE HEADLIGHT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **02.10.2014   FR 1459455**

(43) Date de publication de la demande:
**09.08.2017   Bulletin 2017/32**

(73) Titulaire: **Valeo Vision**
**93012 Bobigny Cedex (FR)**

(72) Inventeurs:
• **COURCIER, Marine**
**93012 Bobigny Cedex (FR)**
• **SANCHEZ, Vanesa**
**F-92270 Bois Colombes (FR)**

(74) Mandataire: **Schaffner, Jean**
**Valeo Vision**
**34, rue Saint-André**
**93012 Bobigny (FR)**

(56) Documents cités:
EP-A1- 1 762 776     EP-A1- 2 708 798
EP-A1- 2 743 567     EP-A1- 2 767 752
EP-A2- 2 587 125     WO-A2-2009/130655

**Description**

L'invention a trait au domaine des projecteurs d'éclairage, notamment pour véhicule automobile. L'invention traite d'un projecteur d'éclairage en segments lumineux, tels des bandes, comprenant un assemblage de modules d'éclairage.

Un véhicule automobile est équipé de projecteurs, ou phares, destinés à illuminer la route devant le véhicule, la nuit ou en cas de luminosité réduite. Ces projecteurs peuvent généralement être utilisés selon deux modes d'éclairage : un premier mode " feux de route " et un deuxième mode " feux de croisement ". Le mode " feux de route " permet d'éclairer fortement la route loin devant le véhicule. Le mode " feux de croisement " procure un éclairage plus limité de la route, mais offrant néanmoins une bonne visibilité, sans éblouir les autres usagers de la route. Ces deux modes d'éclairage sont complémentaires. Le conducteur du véhicule doit manuellement changer de mode en fonction des circonstances, au risque d'éblouir par inadvertance un autre usager de la route. En pratique, le fait de changer de mode d'éclairage de façon manuelle peut manquer de fiabilité et s'avérer parfois dangereux. En outre, le mode feux de croisement procure une visibilité parfois insatisfaisante pour le conducteur du véhicule.

Pour améliorer la situation, des projecteurs dotés d'une fonction Adaptive Driving Beam, ADB, d'éclairage adaptatif ont été proposés. Une telle fonction ADB est destinée à détecter de façon automatique un usager de la route susceptible d'être ébloui par un faisceau d'éclairage émis en mode feux de route par un projecteur, et à modifier le contour de ce faisceau d'éclairage de manière à créer une zone d'ombre à l'endroit où se trouve l'usager détecté. Les avantages de la fonction ADB sont multiples : confort d'utilisation, meilleure visibilité par rapport à un éclairage en mode feux de croisement, meilleure fiabilité pour le changement de mode, risque d'éblouissement fortement réduit, conduite plus sûre.

Le document EP2743567A1 divulgue un projecteur de véhicule automobile doté de modules générant un éclairage en segments lumineux sous forme de bandes au travers d'une lentille de projection. Chaque module comprend une série de guides de lumière permettant de mettre en forme des rayonnements issus de diodes électroluminescentes. Grâce à un tel projecteur, il est possible d'éclairer un environnement à l'aide de segments lumineux qui prennent la forme de bandes lumineuses orientées verticalement dont les positions sont maîtrisées. Toutefois, l'intégration d'un projecteur dans un véhicule donné et le style imposé par le constructeur du véhicule imposent une forme spécifique à la lentille de projection.

Des projecteurs en segments lumineux connus utilisent des systèmes optiques complexes ayant des lentilles de projection et de correction à courbures précises. En général, la géométrie d'une lentille de projection est optimisée sur toute sa largeur afin d'optimiser la géométrie et l'emplacement des segments lumineux projetés par une pluralité de sources lumineuses qui utilisent la lentille en parallèle. Afin de minimiser les aberrations optiques et d'optimiser ainsi la netteté et la forme des segments lumineux, il est habituel, de prévoir une lentille de projection (dans le cas où elle est convergente) ayant une convexité plus courbée sur la face de sortie que sur la face d'entrée (en vertical et horizontal). Pour chaque disposition de sources lumineuses différente et pour chaque style imposé par le constructeur du véhicule équipé du projecteur en question, un système optique sur mesure doit être conçu et réalisé, ce qui entraine des temps et coûts de développement importants. Ces coûts sont cependant courants puisque les constructeurs automobiles souhaitent se démarquer de plus en plus par une signature optique. La signature optique change en principe pour chaque modèle de véhicule et requiert une disposition particulière des sources lumineuses, et donc un système optique complexe dédié afin de pouvoir implémenter une fonctionnalité de type ADB.

L'invention a pour objectif de pallier à au moins un des problèmes posés par l'art antérieur. Plus précisément, l'invention a pour objectif de proposer un module d'éclairage, dont une ou plusieurs instances peuvent être utilisées pour assembler une panoplie de projecteurs pour véhicules automobiles ayant des signatures optiques différentes et étant aptes à implémenter un fonctionnalité de type ADB.

L'invention a pour objet un assemblage comprenant une pluralité de modules d'éclairage identiques pour un dispositif d'éclairage à segments lumineux d'un projecteur d'éclairage de véhicule automobile, chacun desdits modules d'éclairage comprenant :

- au moins un élément optique primaire muni d'une structure de formation de pixel lumineux destinée à coopérer avec au moins une source de lumière et d'un dioptre correcteur de sortie, chaque élément optique primaire définissant un axe optique ;
- une lentille de projection; les modules étant configurés de sorte à projeter de la lumière entrant dans le ou les éléments optiques primaires et sortant par la lentille de projection sous la forme d'un segment lumineux, tel une bande ou un polygone lumineux, formé d'au moins un pixel lumineux ; dans le sens normal de montage le dioptre de sortie de la lentille de projection ayant une forme torique ; caractérisé en ce que les modules d'éclairage sont assemblés en juxtaposition horizontale dans le sens normal de montage, de façon à ce que les lentilles de projection respectives forment une surface continue de l'assemblage et en ce que chaque module comprend des moyens de positionnement latéraux destinés à juxtaposer horizontalement deux modules identiques dans le sens normal de montage de façon à ce que les dioptres de sortie des modules forment une surface continue.

Chaque module est configuré de sorte à projeter de la lumière entrant dans le ou les éléments optiques primaires et sortant par la lentille de projection sous la forme d'un segment lumineux, tel une bande ou un polygone lumineux, formé d'au moins un pixel lumineux. Les modules sont remarquables en ce que dans le sens normal de montage le dioptre de sortie de la lentille de projection a une forme torique.

Au sens de la présente invention, le segment lumineux est un motif polygonal dont largeur est constante selon une direction horizontale, ce motif pouvant être dupliqué et juxtaposé de sorte à former un champ illuminé continu. Ce motif est formé d'au moins un pixel lumineux et est éventuellement composé de plusieurs pixels lumineux juxtaposés. Ces pixels sont également polygonaux et peuvent notamment être des carrés, des rectangles, des triangles, des losanges.

Par exemple, sous sa forme la plus simple, le segment lumineux prend la forme d'un carré ou d'une bande verticale rectangulaire, formée d'un unique pixel. Dans une variante, la bande est subdivisée verticalement en pixels rectangulaires ou carrés. Une autre variante de forme de segment est un segment vertical avec deux portions d'extrémité qui sont des bandes rectangulaires décalées horizontalement et reliées entre elles par une portion en losange.

De préférence, dans un plan horizontal selon le sens normal de montage le dioptre de sortie de la lentille de projection peut présenter une courbure convexe de rayon de courbure R donné par la formule :

$$R = \frac{L}{2}\left(\sin\left(\frac{\alpha}{2}\right)^{-1}\right)$$

dans laquelle

- L est la largeur de la lentille de projection vue de face ;
- $\alpha=k(\Delta\theta)/N$, où $\Delta\theta$ est la largeur angulaire en degrés d'un segment lumineux projeté par le module, et k et N sont des entiers positifs.

Dans un plan horizontal selon le sens normal de montage le dioptre de sortie de la lentille de projection peut de préférence présenter une courbure convexe de rayon de courbure R supérieur à 200 mm et de préférence compris entre 400 et 1200 mm. De manière préférentielle, selon un plan horizontal dans le sens normal de montage, la lentille de projection peut comprendre un dioptre d'entrée avec au moins une partie ayant un profil convexe, la ou les convexités étant généralement alignées aux positions des axes optiques des éléments optiques primaires du module.

De préférence, les structures de formation de pixel peuvent comprendre au moins un guide de lumière et/ou des coussinets ou des microlentilles.

De préférence, la ou les sources de lumière peuvent comprendre au moins une diode électroluminescente, LED, et/ou une diode laser.

De manière préférée, les moyens de positionnement latéraux peuvent comprendre au moins une encoche façonnée dans une première face latérale de la lentille de projection, et au moins une protrusion façonnée dans la deuxième face latérale, de façon à ce que l'au moins une protrusion d'un premier module puisse s'engager dans l'au moins une encoche correspondante d'un module identique juxtaposé horizontalement dans le sens normal de montage.

De manière alternative, les modules peuvent comprendre des moyens de support sur lesquelles la ou les sources de lumière et la lentille de projection sont disposées, les moyens de support comprenant les moyens d'alignement et de positionnement latéraux. Les moyens de support, tels qu'une plaque généralement plane, comprend alors des moyens de positionnement latéraux qui servent à disposer un premier module latéralement dans le sens normal de montage à côté d'un deuxième module identique, de façon à ce que les lentilles de projection des deux modules forment une face continue.

De manière avantageuse, les modules peuvent comprendre un dissipateur thermique sur lequel la ou les sources de lumière et la lentille de projection sont disposées, le dissipateur thermique comprenant les moyens d'alignement et de positionnement latéraux.

De préférence, selon la direction de montage normale, l'étendue latérale de chaque module peut être croissante dans la direction de la lumière émise par le module. Alternativement, selon la direction de montage normale, l'étendue latérale de chaque module peut être décroissante dans la direction de la lumière émise par le module.

La plus petite étendue latérale de chaque module selon la direction de montage normale est de préférence 5 à 50% moins large que la plus grande étendue latérale de ce module selon la direction de montage normale.

L'invention a également pour objet un dispositif d'éclairage à segments lumineux pour projecteur d'éclairage de véhicule automobile comportant au moins deux modules d'éclairage selon l'invention ou au moins un assemblage conforme à l'invention ou au moins un module d'éclairage selon l'invention et au moins un assemblage conforme à l'invention.

L'invention propose un module d'éclairage qui permet de réaliser la projection d'au moins un segment lumineux, tel une bande lumineuse. Une pluralité de modules identiques peut être disposée côte à côte dans le sens normal de montage au sein d'un projecteur pour véhicule automobile afin de réaliser un dispositif d'éclairage à segments lumineux. Grâce à la courbure spécifique de la surface de la lentille de projection de chacun des modules identiques, cette disposition résulte en une surface continue à courbure constante au niveau des lentilles de projection ainsi alignées. Bien que chaque module puisse être alimenté et commandé individuellement et indépendamment de chacun des autres modules d'un tel assemblage, l'assemblage en soi donne l'impression d'un unique système de projection à segments lumineux. En vue de face, une surface de projection unique est créée. Les dimensions d'un tel assemblage sont définies par le nombre de modules juxtaposés. Ainsi des signatures optiques et des projecteurs spécifiques peuvent être réalisées en choisissant le nombre et l'emplacement de modules identiques selon l'invention et le nombre et l'emplacement des assemblages, avec un nombre variable ou identique de modules par assemblages, sans pour autant nécessiter une phase de développement et d'implémentation spécifique. La solution en kit pour concevoir des projecteurs pour véhicules automobiles proposée par l'invention permet donc de réduire le temps et les coûts de production d'une panoplie de tels projecteurs. La disposition relative dans l'espace de différents modules tous identiques entre eux permet de répondre à une grande diversité de demandes stylistiques.

D'autres caractéristiques et avantages de la présente invention seront mieux compris à l'aide de la description exemplaire et des dessins parmi lesquels :

- la figure 1 représente une vue isométrique arrière d'un module d'éclairage pour un assemblage selon l'invention ;
- la figure 2a illustre de manière schématique une vue de dessus d'un module ;
- la figure 2b illustre de manière schématique des bandes lumineuses projetées par le module de la figure 2a.
- les figures 3a et 3b illustrent des bandes lumineuses projetées par des modules ;
- la figure 4 illustre des bandes lumineuses projetées par des modules ;
- la figure 5 montre de manière schématique une vue de dessus d'un assemblage de modules selon un mode de réalisation de l'invention ;
- la figure 6 montre une coupe transverse à l'axe optique à travers une lentille de projection d'un module selon un mode de réalisation de l'invention
- les figures 7A et 7B illustrent des bandes lumineuses projetées par des modules selon d'autres modes de réalisation de l'invention.

Dans la description qui suit, des numéros de référence similaires seront utilisés pour décrire des concepts similaires à travers des modes de réalisation différents de l'invention.

Sauf indication spécifique du contraire, des caractéristiques techniques décrites en détail pour un mode de réalisation donné peuvent être combinés aux caractéristiques techniques décrites dans le contexte d'autres modes de réalisation décrits à titre exemplaire et non limitatif.

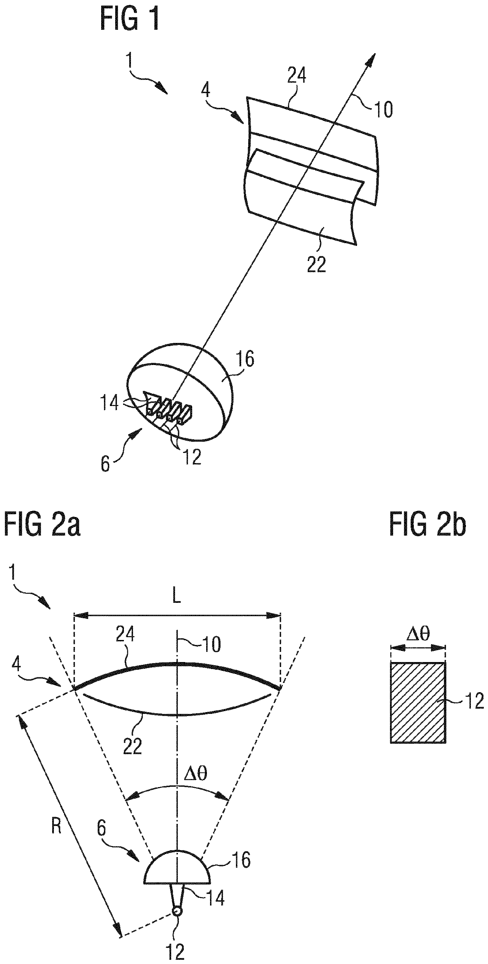

La figure 1 représente de manière simplifiée un module d'éclairage 1 pour un assemblage selon l'invention. Le projecteur est généralement représenté selon le sens d'éclairage. Le projecteur est en partie représenté via ses dioptres.

Le module d'éclairage 1 comprend, selon le sens d'éclairage, un élément optique primaire 6 et une lentille de projection 4. L'élément optique primaire comprend un axe optique 10 selon lequel il éclaire et suivant lequel il concentre et rabat généralement ses rayons.

Le module d'éclairage comprend au moins une source lumineuse 12, telle une diode électroluminescente, LED ou une diode laser, qui produit des rayons lumineux pénétrant dans le système optique via l'élément optique primaire 6. Le module 1 peut encore comprendre un boîtier qui n'est pas représenté par soucis de clarté. Les sources lumineuses du module sont alimentées de façon connue par un dispositif de pilotage de l'alimentation des sources lumineuses qui ne sera pas décrit en détail dans le contexte de la présente invention. De tels dispositifs sont connus par l'homme du métier et comprennent en général un convertisseur qui permet de convertir une tension fournie par une source de courant d'un véhicule automobile, telle qu'une batterie d'automobile, en une tension de charge apte à alimenter la ou les sources de lumières. Le dispositif de pilotage de l'alimentation permet, de manière connue pour les systèmes ADB, d'alimenter de manière sélective indépendante chaque groupe de sources de lumières qui participent à la création d'un pixel projeté.

Dans l'exemple de la figure 1 l'élément optique primaire 6 comprend au moins un guide de lumière 14, quatre dans le cas présent, et un corps avec un dioptre de sortie 16 courbe. Le corps de l'élément optique primaire forme une portion de correction avec une surface 16 en dôme, par exemple hémisphérique. Chaque guide de lumière 14, également appelé guide d'onde ou guide d'optique, est associé à une source de lumière primaire 12, il conduit la lumière à travers de la matière de l'élément. Il présente un allongement, éventuellement principal, le long de l'axe optique 10. Le matériau constituant les guides de lumière 14 et le corps est transparent. Il s'agit ici d'un matériau pour lentille optique, tel qu'un matériau organique ou éventuellement du verre et est venu de matière. Un tel élément optique est bien connu de l'homme du métier et peut être réalisé tel que décrit dans le document EP2743567A1. De manière alternative, l'élément optique primaire peut comprendre des microlentilles ou des coussinets pour guider la lumière émise par les sources lumineuses.

La lentille de projection 4 comprend un dioptre d'entrée 22 en regard du dioptre de sortie 16 de l'élément optique primaire, et un dioptre de sortie 24. Chacun de ces dioptres est continu. La lentille de projection 4 forme un ruban de matière continu. La surface du dioptre de sortie 24 suit la géométrie d'une surface torique obtenue en tournant un cercle autour d'un axe déporté de son centre. Deux modules identiques présentent donc deux éléments de surface identiques d'un même tore et peuvent être assemblés horizontalement selon le sens normal de montage pour former un élément de surface continu du même tore ayant une surface double. La surface ainsi crée par les dioptres de sortie 24 peut être élargie en ajoutant des modules identiques.

Selon un mode de réalisation préféré de l'invention, le rayon de courbure R du dioptre de sortie 24 de la lentille de projection 4 est donné par l'équation suivante :

$$R = \frac{L}{2}\left(\sin\left(\frac{\alpha}{2}\right)^{-1}\right) \qquad (1.1)$$

dans laquelle L est la largeur de la lentille de projection vue de face et $\alpha = k(\Delta\theta)/N$. $\Delta\theta$ est la largeur angulaire en degrés d'un segment lumineux projeté par le module et k et N sont des entiers positifs.

La largeur segment lumineux est sensiblement égale à la largeur à mi-hauteur du profil d'intensité.

Les grandeurs qui interviennent dans l'équation 1.1 sont illustrées de manière schématique par la figure 2a, qui montre une vue schématique de dessus d'un module d'éclairage selon l'invention dans le cas où $\alpha = \Delta\theta$.

L est la largeur de la lentille de projection vue de face, dans le cas illustré, il s'agit de la longueur d'une corde d'un cercle de rayon R qui a pour centre l'emplacement de la source de lumière 12 unique du module, la corde étant soutenue par un angle $\Delta\theta$.

$\Delta\theta$ est la largeur angulaire en degrés d'un segment lumineux projeté par le module.

De manière préférée, le rayon de courbure R est supérieur à 200 mm et de préférence compris entre 400 et 1200 mm. L'angle $\Delta\theta$ est de préférence compris entre 1.5° et 3°.

La face d'entrée 22 de la lentille de projection 4 comprend de préférence une géométrie convexe dans le sens horizontal, telle qu'indiquée sur la figure 2a. La convexité est de préférence centrée sur l'axe optique 10 de l'élément optique primaire.

La figure 2b illustre de manière schématique un segment lumineux sous forme de bande lumineuse que le module 1 de la figure 2a est capable de projeter sur la route devant le véhicule équipé du module. La source de lumière unique 12 crée une bande unique de largeur angulaire $\Delta\theta$. Des modules similaires capables de créer une pluralité de bandes parallèles de largeur identique (contigües ou espacées chacune d'une largeur angulaire $\Delta\theta$) en utilisant une pluralité de sources de lumière et/ou d'éléments optiques primaires peuvent être réalisés par l'homme du métier en utilisant une lentille de projection respectant la formule selon l'invention.

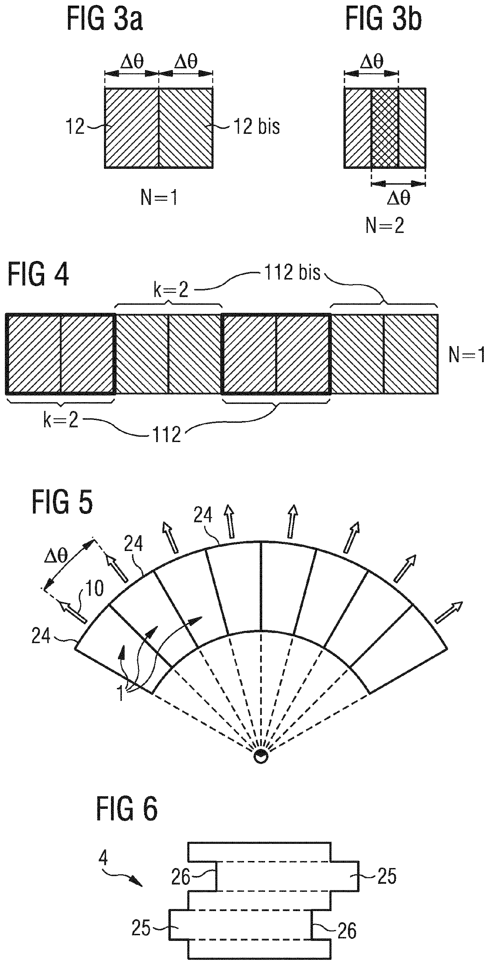

L'exemple qui est décrit ci-dessous illustre l'impact du facteur N qui intervient dans le calcul du rayon de courbure du dioptre de sortie de la lentille de projection selon l'invention. Lorsque plusieurs modules identiques, donc de même rayon de courbure R sont mis côte à côte, le facteur entier N définit un facteur de multiplication de la résolution obtenu par la juxtaposition des modules. Ceci est illustré par les figures 3a et 3b à titre exemplaire. Dans le cas de la figure 3a, deux modules identiques (N =1) similaires à celui illustré par la figure 2a sont juxtaposés horizontalement selon le sens normal de montage. Les deux bandes lumineuses créées par la source lumineuse 12 du premier module et la source lumineuse 12bis du deuxième module ont toutes les deux une largeur angulaire égale à $\Delta\theta$, et elles ne se chevauchent pas latéralement. Donc l'angle $\Delta\theta$ entre les axes optiques des deux modules contigus est sensiblement égal, aux effets de flou de coupure près, à la largeur angulaire d'une bande lumineuse. Cet angle donne la résolution du faisceau obtenu.

Dans le cas de la figure 3b, le facteur N est égal à 2. On obtient une superposition latérale des moitiés de bandes lumineuses projetées. L'angle horizontal entre les axes optiques des deux modules contigus est sensiblement, aux effets de flou près, à la moitié de la largeur angulaire d'un segment lumineux. La résolution est ainsi doublée. Avec N croissant, la résolution du faisceau global obtenu par un assemblage de modules identiques augmente, tandis que la largeur globale de ce faisceau diminue.

Le facteur k qui intervient dans le calcul du rayon de courbure du dioptre de sortie de la lentille de projection selon l'invention est un entier prédéfini.

Il correspond à un choix de réalisation du faisceau lumineux global à segments généré par un dispositif d'éclairage comprenant au moins deux modules selon l'invention.

Le facteur k est le nombre de pixels constituant un groupe lumineux issu d'un unique module jusqu'à rencontrer un pixel provenant d'un autre module du dispositif d'éclairage, lorsque le faisceau global est parcouru dans un sens déterminé dans sa largeur (de la gauche vers la droite ou inversement). On appelle ainsi groupe lumineux un ensemble de pixels contigus ou en chevauchement produit exclusivement par un module, chaque module projetant au moins un groupe lumineux, lesdits groupes pouvant être contigus ou espacés. Un groupe lumineux contient au moins un pixel.

Le faisceau global d'un dispositif d'éclairage à segments lumineux est constitué d'une succession de groupes lumineux provenant d'au moins deux modules identiques selon l'invention, lesdits groupes pouvant être contigus ou en chevauchement selon le facteur N choisi.

Pour des raisons pratiques de modularité et de compacité du module de l'invention, k sera choisi inférieur ou égal à 50, plus généralement inférieur ou égal à 20 et préférentiellement inférieur ou égal à 10.

De même, N sera avantageusement compris entre 1 et 4, bornes incluses.

Dans les exemples qui vont suivre, le segment lumineux est formé d'un seul pixel et prend la forme d'une bande lumineuse rectangulaire orientée verticalement.

Un premier exemple est illustré de manière schématique par la figure 4, qui montre deux ensembles de k=2 pixels projetés 112 par un premier module, ainsi que deux ensembles de pixels 112bis projetés par un deuxième module identique au premier module. Dans le cas illustré la courbure selon l'équation 1.1 utilise les facteurs k=2 et N=1 respectivement. Les pixels projetés par les deux modules identiques viennent s'entrelacer pour créer un faisceau constitué de pixels contigus.

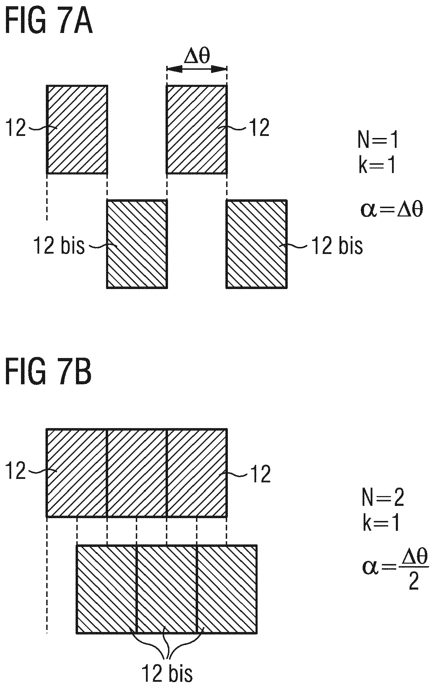

D'autres exemples de possibilité de configuration de faisceau global à bandes lumineuses générés par au moins deux modules selon l'invention associés dans un dispositif d'éclairage à segments lumineux sous forme de bandes sont illustrés aux figures 7A et 7B. Sur ces deux figures, les pixels sous forme de bandes issus de chacun des modules n'ont pas été représentés superposés pour faciliter la compréhension, étant entendu que le faisceau global résulte de la somme des pixels. A la figure 7A, on a N=1 et k=1, chaque module générant deux pixels espacés. A la figure 7B, on a k=1 et N=2, chaque module générant 3 pixels distincts contigus, les pixels du premier module et du second module étant ensuite en chevauchement.

Dans tous les modes de réalisation, afin de faciliter la juxtaposition horizontale des modules, il est préférable que l'étendue latérale du module, ou de son boîtier, selon la direction de montage normale soit croissante ou décroissante dans la direction de la lumière émise par le module. De préférence, l'étendue de la partie arrière est strictement inférieure à celle de la partie avant où est logée la lentille de projection. Avantageusement la partie arrière est au moins cinq fois moins large que la partie avant. De préférence, la partie arrière est 5% à 50% moins large que la partie avant. Ceci est illustré par le dessin schématique de la figure 5, qui montre une vue de dessus d'un assemblage de huit modules identiques disposés en contact latéral et conformes à l'invention.

Alternativement, l'étendue de la partie avant est strictement inférieure à celle de la partie arrière. Dans ce cas la partie avant est avantageusement au moins cinq fois moins large que la partie arrière. De préférence, la partie avant est 5% à 50% moins large que la partie arrière.

Dans tous les modes de réalisation de l'invention, le module comprend des moyens d'alignement ou de positionnement latéraux, qui permettent de faciliter la juxtaposition de deux modules identiques horizontalement dans le sens normal de montage, de façon à ce que les dioptres de sortie des modules forment un élément de surface torique continue. Les moyens d'alignement peuvent être façonnés dans les lentilles de projection ou être compris dans des moyens de support qui permettent de tenir les différents composants du module à leur emplacement prévu. Alternativement les moyens d'alignement peuvent être prévus dans un élément dissipateur thermique non-illustré du module.

A titre exemplaire, la figure 6 montre une coupe interne d'une lentille de projection selon un mode de réalisation de l'invention. La section est réalisée par un plan vertical transverse à l'axe optique. Les moyens d'alignement comprennent des encoches 26 et des protrusions 25 sur les bords latéraux de la lentille de projection. L'emplacement des encoches et des protrusions est choisi de façon à ce que les protrusions d'un premier module selon l'invention puissent s'engager dans les encoches correspondantes d'un module identique juxtaposé horizontalement dans le sens normal du montage du module. D'autres géométries d'encoches et de protrusions sont évidemment envisageables sans pour autant sortir du cadre de l'invention.

On comprend bien que l'invention n'est pas limitée à la réalisation modulaire de dispositifs d'éclairage automobile à segments lumineux comportant un pixel unique sous forme de bandes lumineuses rectangulaires orientées verticalement, tel qu'illustré dans les exemples, et que d'autres formes de segments peuvent être réalisées par l'Homme du métier sans sortir du cadre de la présente invention.

La présente description et les exemples illustrés par les figures permettent à l'Homme du métier de créer une panoplie de modules d'éclairage conformes à l'invention en utilisant différents paramètres dans l'équation 1.1. Les assemblages de tels modules peuvent alors être utilisés pour créer des projecteurs à segments lumineux pour véhicules automobiles ayant des signatures optiques différentes.


**Revendications**

1. Assemblage comprenant une pluralité de modules d'éclairage identiques pour un dispositif d'éclairage à segments lumineux d'un projecteur d'éclairage (1) de véhicule automobile, chacun desdits modules d'éclairage (1) comprenant :

    - au moins un élément optique primaire (6) muni d'une structure de formation de pixel lumineux destinée à coopérer avec au moins une source de lumière (12) et d'un dioptre correcteur de sortie (16), chaque élément optique primaire définissant un axe optique (10) ;
    - une lentille de projection (4) ;

    les modules (1) étant configurés de sorte à projeter de la lumière entrant dans le ou les éléments optiques primaires et sortant par la lentille de projection (4) sous la forme d'un segment lumineux, tel une bande ou un polygone lumineux, formé d'au moins un pixel lumineux ;
    dans le sens normal de montage le dioptre de sortie (24) de la lentille de projection (4) ayant une forme torique ;
    **caractérisé en ce que** les modules d'éclairage sont assemblés en juxtaposition horizontale dans le sens normal de montage, de façon à ce que les lentilles de projection respectives forment une surface continue de l'assemblage et **en ce que** chaque module comprend des moyens de positionnement latéraux, destinés à juxtaposer horizontalement deux modules identiques dans le sens normal de montage, de façon à ce que les dioptres de sortie des modules forment une surface continue.

2. Assemblage selon la revendication 1, **caractérisé en ce que** dans un plan horizontal selon le sens normal de montage le dioptre de sortie (24) de la lentille de projection (4) présente une courbure convexe de rayon de courbure R donné par la formule :

$$R = \frac{L}{2}\left(\sin\left(\frac{\alpha}{2}\right)^{-1}\right)$$

dans laquelle

- L est la largeur de la lentille de projection vue de face ;
- $\alpha = k(\Delta\theta)/N$, où $\Delta\theta$ est la largeur angulaire en degrés d'un segment lumineux projeté par le module et k et N sont des entiers positifs.

3. Assemblage selon une des revendications 1 ou 2, **caractérisé en ce que** dans un plan horizontal selon le sens normal de montage le dioptre de sortie (24) de la lentille de projection (4) présente une courbure convexe de rayon de courbure R supérieur à 200 mm et de préférence compris entre 400 et 1200 mm.

4. Assemblage selon l'une des revendications 1 à 3, **caractérisé en ce que** selon un plan horizontal dans le sens normal de montage, la lentille de projection (4) comprend un dioptre d'entrée (22) avec au moins une partie ayant un profil convexe, la ou les convexités étant généralement alignées aux positions des axes optiques des éléments optiques primaires du module.

5. Assemblage selon une des revendications 1 à 4, **caractérisé en ce qu'**une lentille intermédiaire est disposée pour chaque élément d'optique primaire (6) entre le dioptre de sortie (16) de l'élément optique primaire (6) et la lentille de projection (4), la lentille intermédiaire étant configurée de sorte à concentrer le rayonnement issu du dioptre de sortie (16) de l'élément optique primaire (6) correspondant sur la lentille de projection (4).

6. Assemblage selon une des revendications 1 à 5, **caractérisé en ce que** les structures de formation de pixel comprennent au moins un guide de lumière et/ou des coussinets.

7. Assemblage selon une des revendications 1 à 6, **caractérisé en ce que** la ou les sources de lumière comprennent au moins une diode électroluminescente, LED, et/ou une diode laser.

8. Assemblage selon l'une des revendications précédente, **caractérisé en ce que** les moyens de positionnement comprennent au moins une encoche (26) façonnée dans une première face latérale de la lentille de projection, et au moins une protrusion (25) façonnée dans la deuxième face latérale, de façon à ce que l'au moins une protrusion d'un premier module puisse s'engager dans l'au moins une encoche correspondante d'un module identique juxtaposé horizontalement dans le sens normal de montage.

9. Assemblage selon l'une des revendications 1 à 7, **caractérisé en ce que** les modules comprennent des moyens de support sur lesquelles la ou les sources de lumière et la lentille de projection sont disposées, les moyens de support comprenant les moyens de positionnement latéraux.

10. Assemblage selon une des revendications 1 à 9, **caractérisé en ce que** l'étendue latérale de chaque module, selon la direction de montage normale, est croissante dans la direction de la lumière émise par le module.

11. Assemblage selon une des revendications 1 à 9, **caractérisé en ce que** l'étendue latérale de chaque module, selon la direction de montage normale, est décroissante dans la direction de la lumière émise par le module.

12. Assemblage selon une des revendications 10 ou 11 **caractérisé en ce que** la plus petite étendue latérale de chaque module selon la direction de montage normale est 5 à 50% moins large que la plus grande étendue latérale de ce module selon la direction de montage normale.

13. Projecteur d'éclairage (2) de véhicule automobile **caractérisé en ce qu'**il comprend un dispositif d'éclairage à bandes comportant au moins un assemblage selon l'une des revendications 1 à 12.

**Patentansprüche**

1. Anordnung umfassend eine Mehrzahl identischer Beleuchtungsmodule für eine Lichtsegment-Beleuchtungsvorrichtung eines Kraftfahrzeug-Scheinwerfers (1), jeder der Beleuchtungsmodule (1) umfassend:

- mindestens ein primäres optisches Element (6), das mit einer Lichtpixel-Bildungsstruktur, die dazu bestimmt ist, mit mindestens einer Lichtquelle (12) zusammenzuwirken, und einem Austritts-Korrekturdiopter (16) versehen ist, wobei jedes primäre optische Element eine optische Achse (10) definiert;
- eine Projektionslinse (4);

wobei die Module (1) so ausgebildet sind, dass sie Licht, das in das oder die primären optischen Elemente eintritt und durch die Projektionslinse (4) austritt, in Form eines Lichtsegments wie eines Lichtstreifens oder - polygons projiziert, das von mindestens einem Lichtpixel gebildet ist;
wobei der Austrittsdiopter (24) der Projektionslinse (4) in der normalen Einbaurichtung eine torische Form aufweist;
**dadurch gekennzeichnet, dass** die Beleuchtungsmodule in der normalen Einbaurichtung horizontal nebeneinander angeordnet sind, so dass die jeweiligen Projektionslinsen eine durchgehende Fläche der Anordnung bilden, und dadurch, dass jedes Modul seitliche Positionierungsmittel umfasst, die dazu bestimmt sind, zwei identische Module in der normalen Einbaurichtung horizontal nebeneinander anzuordnen, so dass die Austrittsdiopter der Module eine durchgehende Fläche bilden.

2. Anordnung nach Anspruch 1, **dadurch gekennzeichnet, dass** der Austrittsdiopter (24) der Projektionslinse (4) in einer horizontalen Ebene in der normalen Einbaurichtung eine konvexe Krümmung mit einem Krümmungsradius R aufweist, der durch die folgende Formel erhalten wird:

$$R = \frac{L}{2}\left(sin\left(\frac{\alpha}{2}\right)^{-1}\right)$$

wobei

- L die Breite der Projektionslinse von vorne betrachtet ist;
- a=k($\Delta\theta$)/N, wobei $\Delta\theta$ die Winkelbreite in Grad eines Lichtsegments ist, das von dem Modul projiziert wird, und k und N positive Ganzzahlen sind.

3. Anordnung nach einem der Ansprüche 1 oder 2, **dadurch gekennzeichnet, dass** der Austrittsdiopter (24) der Projektionslinse (4) in einer horizontalen Ebene in der normalen Einbaurichtung eine konvexe Krümmung mit einem Krümmungsradius R aufweist, der größer als 200 mm ist und vorzugsweise zwischen 400 und 1200 mm liegt.

4. Anordnung nach einem der Ansprüche 1 bis 3, **dadurch gekennzeichnet, dass** die Projektionslinse (4) in einer horizontalen Ebene in der normalen Einbaurichtung einen Eintrittsdiopter (22) mit mindestens einem Abschnitt, der ein konvexes Profil aufweist, umfasst, wobei die Konvexität(en) allgemein an den Positionen der optischen Achsen der primären optischen Elemente des Moduls ausgerichtet sind.

5. Anordnung nach einem der Ansprüche 1 bis 4, **dadurch gekennzeichnet, dass** eine Zwischenlinse für jedes primäre optische Element (6) zwischen dem Austrittsdiopter (16) des primären optischen Elements (6) und der Projektionslinse (4) angeordnet ist, wobei die Zwischenlinse so ausgebildet sind, dass sie die Strahlung aus dem Austrittsdiopter (16) des entsprechenden primären optischen Elements (6) auf der Projektionslinse (4) konzentriert.

6. Anordnung nach einem der Ansprüche 1 bis 5, **dadurch gekennzeichnet, dass** die Pixelbildungsstrukturen mindestens einen Lichtleiter und/oder Kissen umfassen.

7. Anordnung nach einem der Ansprüche 1 bis 6, **dadurch gekennzeichnet, dass** die Lichtquelle(n) mindestens eine Leuchtdiode, LED, und/oder eine Laserdiode umfassen.

8. Anordnung nach einem der vorhergehenden Ansprüche, **dadurch gekennzeichnet, dass** die Positionierungsmittel mindestens eine Nut (26), die in einer ersten Seitenfläche der Projektionslinse ausgebildet ist, und mindestens einen Vorsprung (25), der in der zweiten Seitenfläche ausgebildet ist, umfassen, so dass der mindestens eine Vorsprung eines ersten Moduls in die mindestens eine entsprechende Nut eines identischen Moduls eingreifen kann, das in der normalen Einbaurichtung horizontal daneben angeordnet ist.

9. Anordnung nach einem der Ansprüche 1 bis 7, **dadurch gekennzeichnet, dass** die Module Tragmittel umfassen, auf welchen die Lichtquelle(n) und die Projektionslinse angeordnet sind, die Tragmittel umfassend die seitlichen Positionierungsmittel.

10. Anordnung nach einem der Ansprüche 1 bis 9, **dadurch gekennzeichnet, dass** die seitliche Erstreckung jedes Moduls in der normalen Einbaurichtung in der Richtung des Lichts, das von dem Modul abgegeben wird, zunehmend ist.

11. Anordnung nach einem der Ansprüche 1 bis 9, **dadurch gekennzeichnet, dass** die seitliche Erstreckung jedes Moduls in der normalen Einbaurichtung in der Richtung des Lichts, das von dem Modul abgegeben wird, abnehmend ist.

12. Anordnung nach einem der Ansprüche 10 oder 11, **dadurch gekennzeichnet, dass** die kleinste seitliche Erstreckung jedes Moduls in der normalen Einbaurichtung 5 bis 50 % weniger breit als die größte seitliche Erstreckung dieses Moduls in der normalen Einbaurichtung ist.

13. Kraftfahrzeug-Scheinwerfer (2), **dadurch gekennzeichnet, dass** er eine Streifen-Beleuchtungsvorrichtung umfasst, die mindestens eine Anordnung nach einem der Ansprüche 1 bis 12 aufweist.

**Claims**

1. An assembly comprising a plurality of identical lighting modules for a lighting device producing light segments of a motor vehicle headlamp (1), each of said lighting modules (1) comprising:

    - at least one primary optical element (6) having a light pixel forming structure intended to cooperate with at least one light source (12) and a corrector exit diopter (16), each primary optical element defining an optical axis (10);
    - a projection lens (4);

    the modules (1) being configured to project light entering the primary optical element or elements and leaving via the projection lens (4) in the form of a light segment, such as a light polygon or strip, formed of at least one light pixel;
    in the normal mounting direction the exit diopter (24) of the projection lens (4) having a toroidal shape, **characterized in that** the lighting modules are assembled in horizontal juxtaposition in the normal mounting direction so that the respective projection lenses form a continuous surface of the assembly and **in that** each module comprises lateral positioning means intended to juxtapose two identical modules horizontally in the normal mounting direction so that the exit diopters of the modules form a continuous surface.

2. Assembly as claimed in claim 1, **characterized in that** in the normal mounting direction in a horizontal plane the exit diopter (24) of the projection lens (4) has a convex curvature with a radius of curvature R given by the formula:

$$R = \frac{L}{2}\left(\sin\left(\frac{\alpha}{2}\right)^{-1}\right)$$

in which

    - L is the width of the projection lens seen from in front;
    - $\alpha = K(\Delta\theta)/N$, where $\Delta\theta$ is the angular width in degrees of a light segment projected by the module and k and N are positive integers.

3. Assembly as claimed in either one of claims 1 or 2, **characterized in that** the exit diopter (24) of the projection lens (4) has in the normal mounting direction in a horizontal plane a convex curvature with a radius of curvature R greater than 200 mm and preferably between 400 and 1200 mm inclusive.

4. Assembly as claimed in any one of claims 1 to 3, **characterized in that** the projection lens (4) includes in the normal mounting direction in a horizontal plane an entry diopter (22) with at least one part having a convex profile, the convexity or convexities being generally aligned to the positions of the optical axes of the primary optical elements of the module.

5. Assembly as claimed in any one of claims 1 to 4, **characterized in that** an intermediate lens for each primary optical element (6) is disposed between the exit diopter (16) of the primary optical element (6) and the projection lens (4), the intermediate lens being configured to concentrate the radiation from the exit diopter (16) of the corresponding primary optical element (6) on the projection lens (4).

6. Assembly as claimed in any one of claims 1 to 5, **characterized in that** the pixel forming structures include at least one light guide and/or cushions.

7. Assembly according to any one of claims 1 to 6, **characterized in that** the light source or sources include(s) at least one light-emitting diode (LED) and/or one laser diode.

8. Assembly as claimed in any of the preceding claims, **characterized in that** the positioning means include at least one notch (26) in a first lateral face of the projection lens and at least one protrusion (25) in the second lateral face so that the at least one protrusion of a first module can be engaged in the corresponding at least one notch of an identical module juxtaposed horizontally in the normal mounting direction.

9. Assembly as claimed in any one of claims 1 to 7, **characterized in that** the modules include support means on which the light source or sources and the projection lens are disposed, the support rings including the lateral positioning means.

10. Assembly as claimed in any one of claims 1 to 9, **characterized in that** the width of each of the modules in the normal mounting direction is increasing in the direction of the light emitted by the module.

11. Assembly as claimed in any one of claims 1 to 9, **characterized in that** the width of each of the modules in the normal mounting direction is decreasing in the direction of the light emitted by the module.

**12.** Assembly as claimed in either one of claims 10 or 11 **characterized in that** the smallest width of each of the modules in the normal mounting direction is 5 to 50% narrower than the greatest width of this module in the normal mounting direction.

**13.** A motor vehicle headlight (2) **characterized in that** it includes a lighting device producing light strips and including at least one assembly as claimed in claim 1 to 12.

**10**

## FIG 1

## FIG 2a

## FIG 2b

## FIG 3a

$\Delta\theta$   $\Delta\theta$

12   12 bis

N=1

## FIG 3b

$\Delta\theta$

$\Delta\theta$

N=2

## FIG 4

112 bis

k=2

k=2   112

N=1

## FIG 5

$\Delta\theta$

10

24

24

24

24

1

## FIG 6

4

26   25

25   26

FIG 7A

$$N=1$$
$$k=1$$

$$\alpha=\Delta\theta$$

FIG 7B

$$N=2$$
$$k=1$$

$$\alpha=\frac{\Delta\theta}{2}$$

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2743567 A1